(19)

Europäisches
Patentamt
European
Patent Office
Office européen
des brevets

(11) **EP 3 471 428 A1**

(12) **EUROPEAN PATENT APPLICATION**

(43) Date of publication:
**17.04.2019 Bulletin 2019/16**

(51) Int Cl.:
***H04Q 11/00*** *(2006.01)*

(21) Application number: **17306392.6**

(22) Date of filing: **13.10.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventor: **USCUMLIC, Bogdan
91620 NOZAY (FR)**

(74) Representative: **Croonenbroek, Thomas Jakob et
al
Innovincia
11, avenue des Tilleuls
74200 Thonon-les-Bains (FR)**

(54) **METHOD FOR TRANSMITTING OPTICAL PACKETS, ASSOCIATED NODE AND MULTI-RING NETWORK**

(57)    The present invention refers to a method for managing the transmission of optical packets in a multi-ring optical packet switched network (200) wherein the optical packets are divided into a first class having a first priority and a second class having a second priority lower than the first priority and wherein the scheduling of the packets is distributed in each node (N1, N2...N9) to provide scalability, the method comprising the following steps:
- encapsulation of the electronic packets of the client traffic (4) comprising a timeout mechanism (11), (102)
- queuing the optical packets corresponding to the encapsulated client packets into optical packet queues (Q1, Q2...Q5),(103)
- scheduling the transmission of optical packets of different queues (Ql, Q2...Q5) based on predefined priorities combined with a token bucket algorithm (5) and a timeout mechanism (11) wherein the token bucket algorithm (5) is used to schedule the client optical packets of the first class to ensure a predefined quality of service and wherein the timeout mechanism (11) is used to limit the duration between the reception of an electronic packet from the client traffic (4) to the creation of an associated optical packet ready to be transmitted through the multi-ring optical packet switched network (200). (105)

Fig.1

Printed by Jouve, 75001 PARIS (FR)

EP 3 471 428 A1

**Description**

## BACKGROUND OF THE INVENTION

The present invention relates to the field of optical transmission networks and in particular to optical packet switching (OPS) multi-ring networks. Optical packets switching rings and multi-ring networks have been considered for the metropolitan area networks. Such networks are since recently also considered for the use in large data centers.

A problem with such networks is to provide a scheduling or resources reservation that ensures a predefined quality of service (QoS) without decreasing the scalability of the network, and by providing in the same time a mechanism for the admission control for the priority traffic.

Indeed, a solution of the state of the art to ensure a predefined quality of service is for example the use of a centralized scheduler which manages the resources reservation for the whole network. However, a centralized scheduling solution is not adaptable to large networks with an increasing capacity.

Some distributed scheduling solutions such as the resilient packet ring (RPR) standard have been developed for electronic ring networks but do not directly apply to multi-ring optical packet switched networks.

It is therefore a goal of the present invention to provide a solution to ensure a predefined QoS in optical packet switched multi-ring networks enabling transparent transmission of the optical packets and the admission control for the priority traffic.

## SUMMARY OF THE INVENTION

Thus, the invention refers to a method for managing the transmission of optical packets in a multi-ring optical packet switched network wherein the optical packets are divided into a first class having a first priority and a second class having a second priority lower than the first priority and wherein the scheduling of the packets is distributed in each node to provide scalability, the method comprising the following steps:

- encapsulation of the electronic packets of the client traffic comprising a timeout mechanism,
- queuing the optical packets corresponding to the encapsulated client packets into optical packet queues,
- scheduling the transmission of optical packets of different queues based on predefined priorities combined with a token bucket algorithm and a timeout mechanism wherein the token bucket algorithm is used to schedule the client optical packets of the first class to ensure a predefined quality of service and wherein the timeout mechanism is used to limit the duration between the reception of an electronic packet from the client traffic to the creation of an associated optical packet ready to be transmitted through the multi-ring optical packet switched network.

The implementation of a scheduling method using a plurality of queues having different priorities combined with a bucket algorithm and a timeout mechanism enables to provide a scalable scheduling while ensuring a predetermined QoS for the high priority optical packets and enables to apply the said method on a multi-ring transparent network.

According to another embodiment, the scheduling of the transmission of optical packets is also based on a fairness criterion for the scheduling of the optical packets of the second class, the fairness criterion being configured for avoiding congestion in the second class optical packets traffic.

The use of a fairness criterion enables to avoid a congestion preventing a node to insert optical packets of the low priority optical packets.

According to another embodiment, the scheduling of the optical packets comprises a selection of the optical packets in the queues to be inserted in available time slots to be transmitted, the selection being achieved according to predefined priorities among the queues, to the token bucket algorithm and to the fairness criterion.

According to another embodiment, the token bucket algorithm comprises the definition of a low limit and a high limit of the token bucket capacity.

According to another embodiment, the high limit is a function of the maximum jitter added to the optical packets due to the scheduling process: $HL = f(MAX_{ins\_jitter})$.

According to another embodiment, the multi-ring network enables a transparent transmission of the packets between two different rings and the scheduling is configured for routing optical packets through an inter-ring path.

According to another embodiment, the optical packets of the first and the second classes are transmitted on different wavelength channels.

According to another embodiment, the optical packets of the first and the second classes are transmitted on the same wavelength channels.

According to another embodiment, the client traffic is an Ethernet client traffic.

The present invention also refers to an optical node of a multi-ring optical packet switched network wherein the optical packets are divided into a first class having a first priority and a second class having a second priority lower than the first priority, the optical node comprising:

- an encapsulation server configured for receiving electronic packets of a client traffic and for encapsulating the client electronic packets to form optical packets that are transmitted to optical packet queues, the encapsulation comprising a timeout mechanism,
- a scheduler configured for selecting optical packets between different queues based on predefined priorities combined with a token bucket algorithm and a timeout mechanism wherein the timeout mechanism is used to limit the duration between the reception of an electronic packet from the client traffic to the creation of an associated optical packet ready to be transmitted through the multi-ring optical packet switched network.

According to another embodiment, the scheduler is also configured for selecting optical packets between different queues using a fairness criterion for the selection of optical packets of the second class.

According to another embodiment, the optical node comprises a communication unit configured for communicating with a centralized software defined networking "SDN" controller and wherein the scheduler is configured for receiving a request for bandwidth on demand applications from the SDN controller and for scheduling optical packet slots in accordance with the request.

According to another embodiment, the optical node the multi-ring network requires an opto-electro-optical "OEO" conversion for the transmission of the packets between two different rings and the optical packets of first and second classes are transmitted on common wavelength channels, the node comprising:

- a first queue for the optical packets of first class from the client traffic,
- a second queue for the optical packets of second class from the client traffic,
- a third queue for the optical packets of second class in intra-ring traffic,
- a fourth queue for the optical packets of first class in inter-ring transit,
- a fifth queue for the optical packets of second class in inter-ring transit,

the scheduler being configured for transmitting in priority:

- a packet of the fourth queue if the fourth queue is not empty else,
- a packet of the first queue if the first queue is not empty and if it is allowed by the token bucket algorithm else,
- a packet of the fifth queue if the fifth queue is not empty else,
- a packet of the third queue if the third queue is not empty else,
- a packet of the second queue if the second queue is not empty and if it is allowed by the fairness criterion.

According to another embodiment, the multi-ring network enables a transparent transmission of the packets between two different rings and wherein the optical packets of first and second classes are transmitted on common wavelength channels, the node comprising:

- a first queue for the optical packets of first class from the client traffic,
- a second queue for the optical packets of second class from the client traffic,
- a third queue for the optical packets of second class in intra-ring traffic,
- a fourth queue for the optical packets of second class in inter-ring transit,

the scheduler being configured for transmitting in priority:

- a packet of the first queue if the first queue is not empty and if it is allowed by the token bucket algorithm else,
- a packet of the fourth queue if the fourth queue is not empty else,
- a packet of the third queue if the third queue is not empty else,
- a packet of the second queue if the second queue is not empty and if it is allowed by the fairness criterion.

According to another embodiment, the multi-ring network requires an opto-electro-optical "OEO" conversion for the transmission of the packets between two different rings and wherein the optical packets of first and second classes are transmitted on separated wavelength channels, the node comprising:

- a first queue for the optical packets of first class from the client traffic,
- a second queue for the optical packets of second class from the client traffic,
- a third queue for the optical packets of first class in inter-ring transit,
- a fourth queue for the optical packets of second class in inter-ring transit,

the scheduler being configured for transmitting in priority, for the first class traffic:

- a packet of the third queue if the third queue is not empty else,
- a packet of the first queue if the first queue is not empty and if it is allowed by the token bucket algorithm and for the second class traffic,
- a packet of the fourth queue if the fourth queue is not empty else,
- a packet of the second queue if the second queue is not empty and if it is allowed by the fairness criterion.

According to another embodiment, the multi-ring network enables a transparent transmission of the packets between two different rings and wherein the optical packets of first and second classes are transmitted on separated wavelength channels, the node comprising:

- a first queue for the optical packets of first class from the client traffic,
- a second queue for the optical packets of second class from the client traffic,

the scheduler being configured for transmitting in priority, for the first class traffic:

- a packet of the first queue if the first queue is not empty and if it is allowed by the token bucket algorithm and, for the second class traffic,
- a packet of the second queue if the second queue is not empty and if it is allowed by the fairness criterion.

The present invention also refers to an optical multi-ring network comprising a plurality of nodes as described previously.

## BRIEF DESCRIPTION OF THE DRAWINGS

FIG.1 is a diagram of a 2D torus optical network comprising nine nodes linked by six optical rings,
FIG.2 is a diagram of an evolution along time of a level of tokens in a token bucket algorithm,
FIG.3 is a diagram of a first configuration of a network node according to the present invention,
FIG.4 is a diagram of a second configuration of a network node according to the present invention,
FIG.5 is a diagram of a third configuration of a network node according to the present invention,
FIG.6 is a diagram of a fourth configuration of a network node according to the present invention,
FIG.7 is a diagram of the steps of a method for managing the transmission of the optical packets according to the present invention.

## DETAILED DESCRIPTION OF THE INVENTION

The following achievements are examples. Although, the specification refers to one or several embodiments, it does not imply that each reference refers to the same embodiment or that the features apply only to a single embodiment. Simple features of different embodiments can also be combined to provide other embodiments.

The present invention refers to a method for transmitting optical packets in a multi-ring optical packet switched network. The links of the network are configured for transmitting a plurality of channels which can be multiplexed for example as wavelength division multiplexing channels. The optical packets transmitted through the network are divided into two classes. A first class also called priority class associated with a first priority and a second class also called best-effort class associated with a second priority lower than the first priority. The optical packets of the first class benefit from a reserved bandwidth, a low delay and a guaranteed jitter performance.

A multi-ring network refers to a network comprising at least two rings having a common node so that optical packets can be transmitted from one ring to another.

There is also two different configurations for the transmission of the optical packets of the two different classes.

According to a first configuration herein called wavelength shared scheduling (WSH) configuration, the packets of the first and the second classes are transmitted on common wavelength channels.

According to a second configuration herein called wavelength separated scheduling (WSEP), the optical packets of the first class are transmitted on wavelength channels different from the optical packets of the second class. In other words, some wavelength channels are dedicated to the transmission of the first class optical packets.

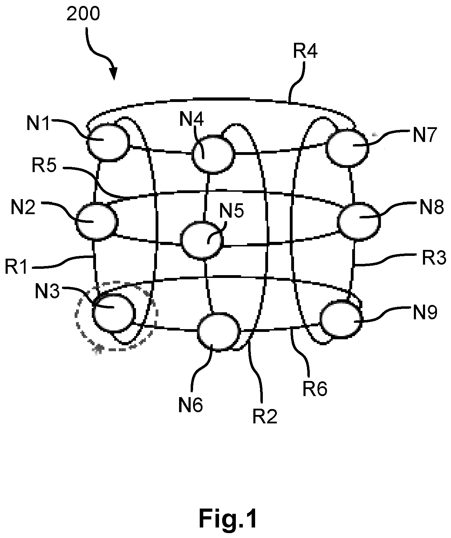

In the following of the description the multi-ring network 200 will corresponds to a two dimension (2-D) torus as represented in figure 1 but other architectures of multi-ring networks 200 are also within the scope of the present invention. The presented architecture comprises nine nodes noted N1, N2...N9 and six rings noted R1, R2...R6, each node belonging to two rings, for example node N3 belongs to ring R1 and R6. The present invention is not limited to such number of nodes or rings.

Furthermore, two different kinds of multi-ring network 200 can be considered.

According to a first type herein called opto-electro-optical (OEO) sensitive network, an OEO conversion is required for any optical packets to be transmitted from one ring to another.

According to a second type herein called OEO free network, an optical packet can be transmitted transparently from one ring to another. These two configurations will be taken into account in the following of the description.

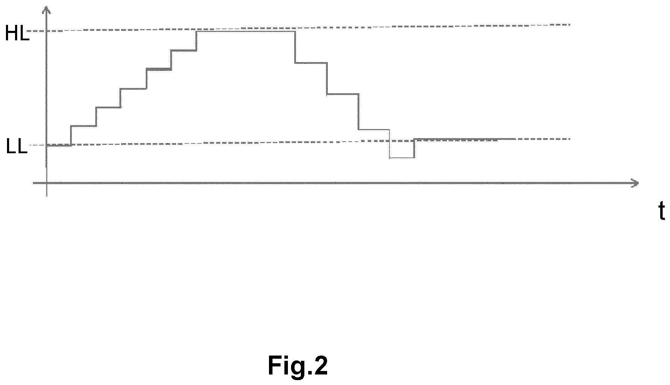

The present invention deals with the scheduling of the optical packets. In order to provide scalability to the network, a scheduler 3 (visible in Fig.2 to Fig.5) is implemented in each node of the network 200 and the different schedulers 3 work independently. Each scheduler 3 can communicate with a central software defined network (SDN) controller. In order to ensure a predefined quality of service for the optical packets having a first class priority, a token bucket algorithm is used for the scheduling.

Furthermore, a timeout mechanism 11 is implemented in an encapsulation server 9 (visible in Fig.2 to Fig.5) in order to optimize the number of optical packets while limiting the duration between the reception of an electronic packet from the client traffic and the creation of an associated optical packet ready to be transmitted through the multiring optical packet switched network. Indeed, in order to limit the number of optical packets, the largest part of the capacity of an optical packet has to be filled with data received from the client traffic in electronic form. However, if the client traffic is low, a large amount of time (for example up to several tens of time slot durations) may be required before enough data are received to fill up the optical packet capacity during its creation also called encapsulation. Thus, the timeout mechanism 11 enables to limit the amount of time required for the transmission of an optical packet even in case of low client traffic.

Optionally, a fairness criterion 7 can also be introduced by the scheduler 3 in the management of the optical packets of the second class in order to avoid the congestion of a node. The fairness criterion 7 refers to the sharing of the available bandwidth allocated to the optical packets of the second class between the different nodes which are involves in the congestion of a congested node. The fairness criterion 7 may be implemented through different methods known in the state of the art and an example of the parameters that can be taken into account to insure such fairness criterion 7 will be described in more details in the following of the description.

The implementation of such scheduling is based on the establishment of a plurality of queues associated with the different types of packets. The different types refer notably to the route of the optical packets (between the same ring, between different rings or client traffic to be inserted) and the class of the optical packets. A priority is assigned to each queue so that an available slot is filed with the optical packet waiting in the queue of highest priority if the associated mechanisms (token bucket algorithm and fairness criterion 7) enable the transmission of the said optical packet.

The token bucket algorithm is based on an analogy of a fixed capacity bucket into which tokens representing the optical packets are added at a fixed rate. A low limit LL threshold and a high limit HL threshold are defined as represented in Fig.2. The bucket is filled by tokens, at a predetermined rate noted $\tau$, whenever a packet is waiting to be inserting in the ring. The high limit HL threshold corresponds to the maximum capacity of the bucket. When the bucket is filled between the low limit LL threshold and the high limit HL threshold, a signal is sent to the client layer, for example the Ethernet layer, to indicate that new optical packets can be sent downstream. When an optical packet is to be transmitted, the bucket is inspected to checked if it contains sufficient tokens (more than the low limit LL threshold) at that time. If so, the optical packet is transmitted and a token is removed from the bucket. The packet does not conform if there are insufficient tokens in the bucket (less than the low limit LL threshold). The non-conformant packets can be managed in different ways: they can be dropped or can be enqueued for subsequent transmission when sufficient tokens have been accumulated in the bucket for example. The token bucket can therefore be understood as follows:

- tokens are added to the bucket at a predefined rate $\tau$ (when packets are waiting to be inserted in the ring),
- the bucket can hold at the most a predefined number of tokens (defined by the low limit LL threshold and the high limit HL threshold). If a token arrives when the bucket is full, the token is disregarded.

In the present case, the low limit threshold may be chosen to be a single packet SP (LL=SP) and the high limit HL threshold can be defined by the following equation:

$$HL = SP + \tau * MAX_{ins\_jitter}/2 \text{ (eq.1)}$$

with SP a single packet, $\tau$ the allowed rate for the first class traffic at the observed network node and MAX_ins_jitter the maximum jitter added to the optical packets due to the scheduling process which can be defined as follows:

$$MAX_{ins\_jitter}=SN*T_{ts}/(1- \tau/LR))\approx SN*T_{ts} \; (eq.2)$$

with SN the number of nodes involved in the congestion of the observed node, $T_{ts}$ the duration of a time slot and LR the line rate or rate of a link in the network.

Other implementations of token bucket may also be used to guarantee the QoS for the first class of optical packets without departing from the scope of the present invention.

The scheduling of a node will now be described for each configuration of the network 200. The same functioning applies for all the nodes of the network 200.

1) First configuration: wavelength shared scheduling combined with OEO sensitive network

According to a first embodiment of the network 200, we consider that the wavelength channels are shared by the optical packets of the different classes and that an OEO conversion is required at an intermediate node (between two rings) to ensure the transmission of a packet from one ring to another. For example to transmit an optical packet from ring R1 to ring R6, an OEO conversion is required at node N3.

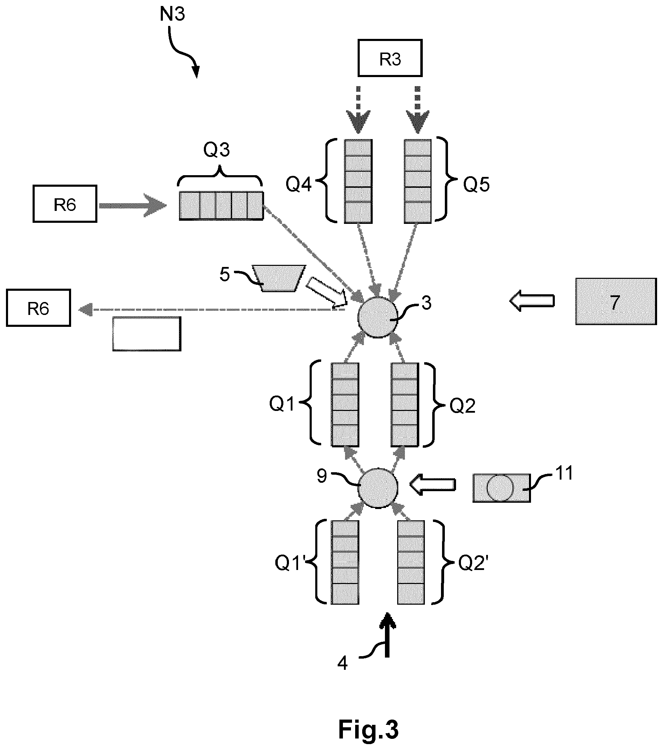

Fig.3 represents a diagram of the scheduling management of a node N3 according to this first embodiment.

The node N3 comprises five different queues:

- a first queue noted Q1 corresponding to the optical packets of first class from the client traffic 4 which need to be inserted in a ring, in the present example R6,
- a second queue noted Q2 corresponding to the optical packets of second class from the client traffic which need to be inserted in a ring, in the present example R6,
- a third queue noted Q3 corresponding to the optical packets of second class for the traffic in transit within the same ring, in the present example R6, also called intra-ring traffic,
- a fourth queue noted Q4 corresponding to the optical packets of first class for the traffic in transit between different rings (the present node being the connection between the two rings, in the present case the node R3 from ring R1 to ring R6), also called inter-ring traffic,
- a fifth queue noted Q5 corresponding to the optical packets of second class for the traffic in transit between different rings, also called inter-ring traffic.

The optical packets of first class are always transmitted transparently for the intra-ring traffic so that there is no queue for such traffic. The different queues are first in first out (FIFO) queues. Concerning the first Q1 and second Q2 queues, the electronic packets of the client traffic 4 are received on two electronic queues Q1' and Q2' and are encapsulated by an encapsulation server 9 to produce the first and second queues Q1 and Q2. The timeout mechanism 11 is launched by the encapsulation server 9 and is used by the scheduler 3 to ensure that the duration between the reception of an electronic packet from the client traffic and the creation of an associated optical packet ready to be transmitted is limited to a predefined duration as described previsouly.

The fairness criterion 7 is used for managing the insertion of the traffic of second class and refers to an algorithm allowing achieving fair bandwidth sharing between the competing nodes inserting the second class optical packets, or low priority traffic, in the network 200. In order to achieve this goal, when a node experiences a congestion (i.e. when there is no more slots available for inserting optical packets corresponding to the client traffic 4), its scheduler 3 calculates a fair rate herein noted FR so that the following equations:

$$b_1+b_2+...+b_n<=LR \; (1-fa) \; (eq.3)$$

with n the index of the congested node, 1, 2...n-1 the index of the upstream nodes participating in the congestion and $b_x$ the data rates of the optical packets of the second class associated with the node x that transit through the congested node n and fa the fraction of the transmission capacity of node n reserved for the first class optical packets.

$$b_i/w_i<=FR \; (eq.4)$$

with i the index varying between 1 and n and $w_i$ a weight factor fixed by the network operator and associated to the node of index i.

The scheduler 3 of the congested node determines the value of the fair rate FR and send it upstream to the different upstream nodes participating in the congestion. Each of the upstream nodes limits their transmission rate for the packet of second class according to the received value of fair rate. The value of fair rate evolves therefore along time according to the congestions occurring in the different nodes.

Other implementations of fairness algorithm may also be used to avoid congestion of the second class traffic without departing from the scope of the present invention.

The different queues are managed by the scheduler 3 which is configured for using the token bucket algorithm 5 and possibly the fairness criterion 7. Priorities are assigned to the different queues and the scheduler 3 is configured to apply the priorities and the algorithm for deciding of the transmission of the next optical packet.

In the present case, the scheduler 3 is configured for determining, for each wavelength channel if a time slot is free. In case of a free time slot, the scheduler 3 determines if there is a packet waiting in the fourth queue Q4 (queue of highest priority). If the fourth queue Q4 is not empty, a packet of the fourth queue Q4 is inserted in the available time slot. Otherwise, the scheduler 3 determines if the first queue Q1 is empty. If the first queue Q1 is not empty, the scheduler 3 determines based on the token bucket (i.e. if the token bucket is filled between a low limit LL threshold and a high limit HL threshold) if a packet of the first queue Q1 can be transmitted. If it is the case, an optical packet of the first queue Q1 is inserted in the available time slot and the token bucket level is updated. Otherwise, the scheduler 3 determines if the fifth queue Q5 is empty. If the fifth queue Q5 is not empty, a packet of the fifth queue Q5 is inserted in the available time slot. Otherwise, the scheduler 3 determines if the third queue Q3 is empty. If the third queue Q3 is not empty, a packet of the third queue Q3 is inserted in the available time slot. Otherwise, the scheduler 3 determines if the second queue Q2 (queue having the lowest priority) is empty. If the second queue Q2 is not empty and if it is allowed by the fairness algorithm, a packet of the second queue Q2 is inserted in the available time slot.

2) Second configuration: wavelength shared scheduling combined with OEO free network

According to a second embodiment of the network, we consider that the wavelength channels are shared by the optical packets of the different classes and that the optical packets of the first class are transmitted from one ring to another without any OEO conversion.

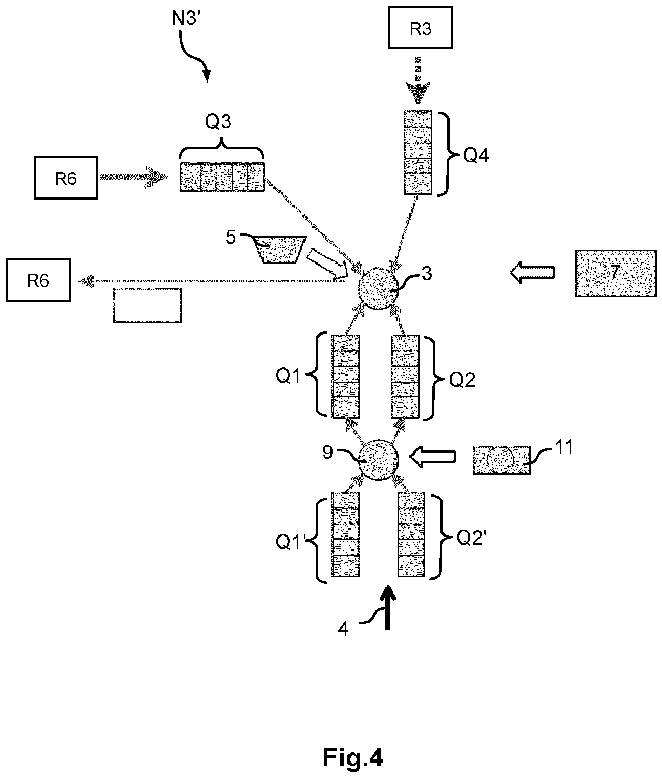

Fig.4 represents a diagram of the scheduling management of a node, for example a node N3', according to this second embodiment.

The node N3' comprises four different queues:

- a first queue noted Q1 corresponding to the optical packets of first class from the client traffic 4 which need to be inserted in a ring, in the present example the ring R6,
- a second queue noted Q2 corresponding to the optical packets of second class from the client traffic 4 which need to be inserted in a ring, in the present example R6,
- a third queue noted Q3 corresponding to the optical packets of second class for the traffic in transit within the same ring also called intra-ring traffic,
- a fourth queue noted Q4 corresponding to the optical packets of second class for the traffic in transit between different rings, also called inter-ring traffic.

There is no more queue corresponding to the optical packets of first class for the traffic in transit between different rings as such optical packets are transmitted transparently.

The different queues are managed by the scheduler 3 which is configured for using the token bucket algorithm 5 as well as the fairness criterion 7. Priorities are assigned to the different queues and the scheduler 3 is configured to apply the priorities and the algorithm for deciding of the transmission of the next optical packet.

In the present case, the scheduler 3 is configured for determining, for each wavelength channel if a time slot is free. In case of a free slot, the scheduler 3 determines if there is a packet waiting in the first queue Q1 (queue with the highest priority). If the first queue Q1 is not empty, the scheduler 3 determines based on the token bucket (i.e. if the token bucket is filled between a low limit (LL) threshold and a high limit (HL) threshold) if a packet of the first queue Q1 can be transmitted. If it is the case, an optical packet of the first queue Q1 is inserted in the available time slot and the token bucket level is updated. Otherwise, the scheduler 3 determines if the fourth queue Q4 is empty. If the fourth queue Q4 is not empty, a packet of the fourth queue Q4 is inserted in the available time slot. Otherwise, the scheduler 3 determines if the third queue Q3 is empty. If the third queue Q3 is not empty, a packet of the third queue Q3 is inserted in the available time slot. Otherwise, the scheduler 3 determines if the second queue Q2 (queue with the lowest priority) is empty. If the second queue Q2 is not empty and if it is allowed by the fairness algorithm, a packet of the second queue Q2 is inserted in the available time slot.

The other features remain identical to the first configuration described previously.

3) Third configuration: wavelength separated scheduling combined with OEO sensitive network

According to a third embodiment of the network, we consider that the wavelength channels used for the optical packets of the first class are separated from the wavelength channels used for the optical packets of the second class (some wavelength channels are reserved for the first class traffic) and that an OEO conversion is required at the common node to ensure the transmission of a packet from one ring to another.

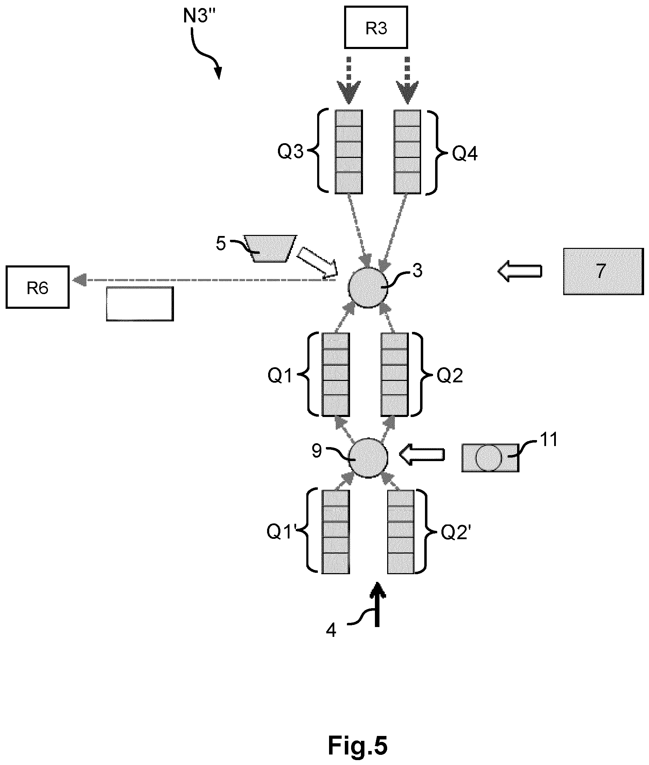

Fig.5 represents a diagram of the scheduling management of a node N3" according to this first embodiment.
The node N3" comprises four different queues:

- a first queue noted Q1 corresponding to the optical packets of first class from the client traffic which need to be inserted in a ring, in the present example R6,
- a second queue noted Q2 corresponding to the optical packets of second class from the client traffic which need to be inserted in a ring, in the present example R6,
- a third queue noted Q3 corresponding to the optical packets of first class for the traffic in transit between different rings (the present node being the connection between the two rings), also called inter-ring traffic,
- a fourth queue noted Q4 corresponding to the optical packets of second class for the traffic in transit between different rings, also called inter-ring traffic.

There is no more queue for the transit traffic on the same ring as such traffic is transmitted transparently (even for the second class traffic)

The optical packets of first class are always transmitted transparently for the intra-ring traffic so that there is no queue for such traffic.

The different queues are managed by the scheduler 3 which is configured for using the token bucket algorithm 5 as well as the fairness criterion 7. Priorities are assigned to the different queues and the scheduler 3 is configured to apply the priorities and the algorithm for deciding of the transmission of the next optical packet.

In the present case, the scheduler 3 is configured for determining, for each wavelength channel in a subset of wavelengths carrying exclusively first class traffic if a time slot is free. In case of a free time slot, the scheduler 3 determines if there is a packet waiting in the third queue Q3. If the third queue Q3 is not empty, a packet of the third queue Q3 is inserted in the available time slot. Otherwise, the scheduler 3 determines if the first queue Q1 is empty. If the first queue Q1 is not empty, the scheduler 3 determines based on the token bucket (i.e. if the token bucket is filled between a low limit LL threshold and a high limit HL threshold) if a packet of the first queue Q1 can be transmitted. If it is the case, an optical packet of the first queue Q1 is inserted in the available time slot and the token bucket level is updated.

Furthermore, the scheduler 3 is also configured for determining, for each wavelength channel in a subset of wavelengths carrying exclusively second class traffic if a time slot is free. In case of a free time slot, the scheduler 3 determines if there is a packet waiting in the fourth queue Q4. If the fourth queue Q4 is not empty, a packet of the fourth queue Q4 is inserted in the available time slot. Otherwise, the scheduler 3 determines if the second queue Q2 is empty. If the second queue Q2 is not empty and if it is allowed by the fairness algorithm, a packet of the second queue Q2 is inserted in the available time slot.

The other features remain identical to the first configuration described previously.

4) Fourth configuration: wavelength separated scheduling combined with OEO free network

According to a fourth embodiment of the network, we consider that the wavelength channels used for the optical packets of the first class are separated from the wavelength channels used for the optical packets of the second class (some wavelength channels are reserved for the first class traffic) and that no OEO conversion is required to ensure the transmission of a packet from one ring to another.

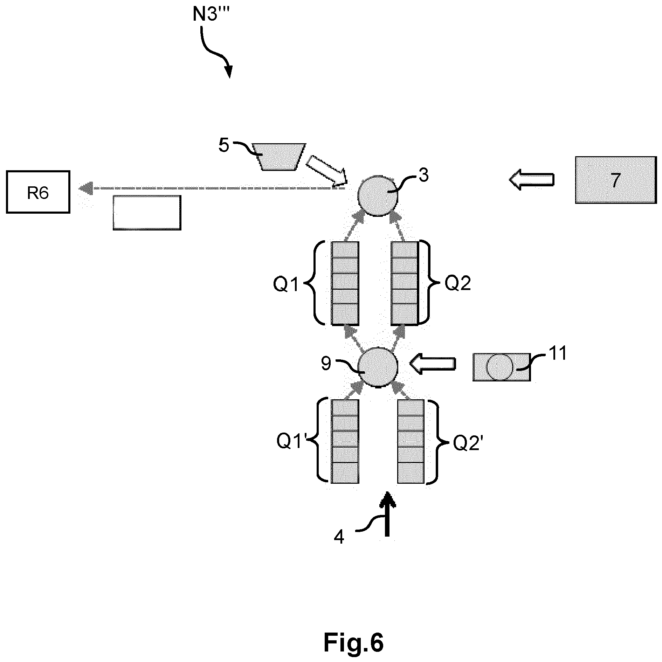

Fig.6 represents a diagram of the scheduling management of a node N3'" according to this first embodiment.

The node N3'" comprises two different queues:

- a first queue noted Q1 corresponding to the optical packets of first class from the client traffic 4 which need to be inserted in a ring,
- a second queue noted Q2 corresponding to the optical packets of second class from the client traffic 4 which need to be inserted in a ring,

There is no more queue for the transit traffic on the same ring as such traffic is transmitted transparently (even for the second class traffic) and no more queue for the inter-ring transit traffic as such traffic is also transmitted transparently.

The different queues are managed by the scheduler 3 which is configured for using the token bucket algorithm 5 as well as the fairness criterion 7. Priorities are assigned to the different queues and the scheduler 3 is configured to apply the priorities and the algorithm for deciding of the transmission of the next optical packet.

In the present case, the scheduler 3 is configured for determining, for each wavelength channel in a subset of wavelengths carrying exclusively first class traffic if a time slot is free. In case of a free time slot, the scheduler 3 determines if there is a packet waiting in the first queue Q1. If the first queue Q1 is not empty, the scheduler determines based on the token bucket (i.e. if the token bucket is filled between a low limit threshold and a high limit threshold) if a packet of the first queue Q1 can be transmitted. If it is the case, an optical packet of the first queue Q1 is inserted in the available time slot and the token bucket level is updated.

Furthermore, the scheduler 3 is also configured for determining, for each wavelength channel in a subset of wavelengths carrying exclusively second class traffic if a time slot is free. In case of a free time slot, the scheduler 3 determines if there is a packet waiting in the second queue Q2. If the second queue Q2 is not empty and if it is allowed by the fairness algorithm, a packet of the second queue Q2 is inserted in the available time slot.

The other features remain identical to the first configuration described previously.

Thus, the scheduler 3 decides on the next optical packet to be transmitted within a ring based on the filling of the different queues, the priorities assigned to the different queues combined to the state of the token bucket algorithm or to the fairness criterion for some queues.

The different configurations have been described for one node, the node N3, but the same scheduling is achieved in the different nodes of the network 200.

Furthermore, it has to be noted that the configurations of network 200 described previously and notably the scheduling of the optical packets are also compatible with a bandwidth on demand feature. In such case, each node comprises a communication unit (not represented) configured for communicating with a central software designed networking (SDN) controller (not represented). The SDN controler determines the routing path that shall be followed by the flow asking for the bandwidth, without explicit slot allocation, and bandwidth along the determined path is reserved.

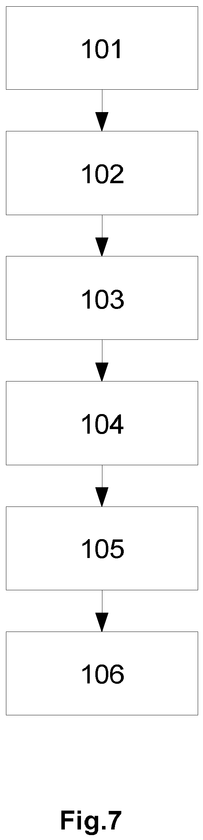

Fig.7 is a flowchart of the different steps of the method for managing the transmission of the optical packets in a node of a multi-ring optical packet switched network enabling the scalability and the guarantees for the quality of service (QoS).

The first step 101 refers to the definition of different queues associated with the optical packets which need to be scheduled by the node and the assignment of priorities to the different queues. The different queues corresponding to different priorities refer to optical packets having different features such as a different priority class or a different types of route, for example inter-ring or intra-ring transmission or insertion as described previously.

The second step 102 refers to the encapsulation of the electronic packets received from the client traffic into optical packets using a timeout mechanism to limit the duration between the reception of the electronic packet from the client traffic to the creation of the associated optical packet ready to be transmitted through the multi-ring optical packet switched network 200.

The third step 103 refers to the queuing of the received and encapsulated optical packets in the different queues defined in step 101.

The fourth step 104 refers to the detection of a free time slot available for inserting an optical packet to be transmitted on the ring.

The fifth step 105 refers to the scheduling of the optical packets of the different queues, that is to say, the selection of the next optical packet to be inserted in a ring based on the priorities of the different queues combined with a token bucket algorithm for the queues with optical packets of the first class, the timeout mechanism and possibly a fairness criterion for the queues with optical packet of the second class.

The sixth step 106 refers to the transmission of the selected packet on the ring toward its destination.

It has to be noted that the order of the different step may be changed or some steps may be achieved simultaneously without departing from the scope of the present invention.

## Claims

1. Method for managing the transmission of optical packets in a multi-ring optical packet switched network (200) wherein the optical packets are divided into a first class having a first priority and a second class having a second priority lower than the first priority and wherein the scheduling of the packets is distributed in each node (N1, N2...N9) to provide scalability, the method comprising the following steps:

- encapsulation of the electronic packets of the client traffic (4) comprising a timeout mechanism (11), (102)
- queuing the optical packets corresponding to the encapsulated client packets into optical packet queues (Q1, Q2...Q5),(103)
- scheduling the transmission of optical packets of different queues (Q1, Q2...Q5) based on predefined priorities combined with a token bucket algorithm (5) and a timeout mechanism (11) wherein the token bucket algorithm (5) is used to schedule the client optical packets of the first class to ensure a predefined quality of service and wherein the timeout mechanism (11) is used to limit the duration between the reception of an electronic packet from the client traffic (4) to the creation of an associated optical packet ready to be transmitted through the multi-ring optical packet switched network (200). (105)

2.  Method in accordance with claim 1 wherein the scheduling (105) of the transmission of optical packets is also based on a fairness criterion (7) for the scheduling of the optical packets of the second class, the fairness criterion (7) being configured for avoiding congestion in the second class optical packets traffic.

3.  Method in accordance with claim 2 wherein the scheduling (105) of the optical packets comprises a selection of the optical packets in the queues (Q1, Q2...Q5) to be inserted in available time slots to be transmitted, the selection being achieved according to predefined priorities among the queues (Q1, Q2...Q5), to the token bucket algorithm (5) and to the fairness criterion (7).

4.  Method in accordance with claim 3 wherein the token bucket algorithm (5) comprises the definition of a low limit (LL) and a high limit (HL) of the token bucket capacity.

5.  Method in accordance with claim 3 wherein the high limit (HL) is a function of the maximum jitter added to the optical packets due to the scheduling process:

$$HL = f(J_{max\_insertion}).$$

6.  Method in accordance with one of the previous claims wherein the multi-ring network enables a transparent transmission of the packets between two different rings (R1, R2...R6) and the scheduling is configured for routing optical packets through an inter-ring path.

7.  Method in accordance with one of the previous claims wherein the optical packets of the first and the second classes are transmitted on different wavelength channels.

8.  Method in accordance with one of the claims 1 to 6 wherein the optical packets of the first and the second classes are transmitted on the same wavelength channels.

9.  Method in accordance with one of the previous claims wherein the client traffic is an Ethernet client traffic.

10. Optical node (N1...N9) of a multi-ring optical packet switched network (200) wherein the optical packets are divided into a first class having a first priority and a second class having a second priority lower than the first priority, the optical node comprising:

    - an encapsulation server (9) configured for receiving electronic packets of a client traffic (4) and for encapsulating the client electronic packets to form optical packets that are transmitted to optical packet queues (Q1, Q2), the encapsulation comprising a timeout mechanism (11),
    - a scheduler (3) configured for selecting optical packets between different queues based on predefined priorities combined with a token bucket algorithm (5) and a timeout mechanism (11) wherein the timeout mechanism (11) is used to limit the duration between the reception of an electronic packet from the client traffic (4) to the creation of an associated optical packet ready to be transmitted through the multi-ring optical packet switched network (200).

11. Optical node (N1...N9) in accordance with claim 10 wherein the scheduler (3) is also configured for selecting optical packets between different queues (Q1, Q2...Q5) using a fairness criterion (7) for the selection of optical packets of the second class.

12. Optical node (N1...N9) in accordance with claim 10 or 11 comprising a communication unit configured for communicating with a centralized software defined networking "SDN" controller and wherein the scheduler (3) is configured for receiving a request for bandwidth on demand applications from the SDN controller and for scheduling optical packet slots in accordance with the request.

13. Optical node (N1...N9) in accordance with one of the claims 10 to 12 wherein the multi-ring network (200) requires an opto-electro-optical "OEO" conversion for the transmission of the packets between two different rings (R1, R2...R6) and wherein the optical packets of first and second classes are transmitted on common wavelength channels, the node (N1...N9) comprising:

    - a first queue (Q1) for the optical packets of first class from the client traffic (4),

- a second queue (Q2) for the optical packets of second class from the client traffic (4),
- a third queue (Q3) for the optical packets of second class in intra-ring traffic,
- a fourth queue (Q4) for the optical packets of first class in inter-ring transit,
- a fifth queue (Q5) for the optical packets of second class in inter-ring transit,

the scheduler (3) being configured for transmitting in priority:

- a packet of the fourth queue (Q4) if the fourth queue is not empty else,
- a packet of the first queue (Q1) if the first queue is not empty and if it is allowed by the token bucket algorithm (5) else,
- a packet of the fifth queue (Q5) if the fifth queue (Q5) is not empty else,
- a packet of the third queue (Q3) if the third queue (Q3) is not empty else,
- a packet of the second queue (Q2) if the second queue (Q2) is not empty and if it is allowed by the fairness criterion (7).

14. Optical node (N1...N9) in accordance with claim 10 to 12 wherein the multi-ring network (200) enables a transparent transmission of the packets between two different rings (R1...R6) and wherein the optical packets of first and second classes are transmitted on common wavelength channels, the node (N1...N9) comprising:

- a first queue (Q1) for the optical packets of first class from the client traffic (4),
- a second queue (Q2) for the optical packets of second class from the client traffic (4),
- a third queue (Q3) for the optical packets of second class in intra-ring traffic,
- a fourth queue (Q4) for the optical packets of second class in inter-ring transit,

the scheduler (3) being configured for transmitting in priority:

- a packet of the first queue (Q1) if the first queue (Q1) is not empty and if it is allowed by the token bucket algorithm (5) else,
- a packet of the fourth queue (Q4) if the fourth queue (Q4) is not empty else,
- a packet of the third queue (Q3) if the third queue (Q3) is not empty else,
- a packet of the second queue (Q2) if the second queue (Q2) is not empty and if it is allowed by the fairness criterion (7).

15. Optical node (N1...N9) in accordance with claim 10 to 12 wherein the multi-ring network (200) requires an opto-electro-optical "OEO" conversion for the transmission of the packets between two different rings and wherein the optical packets of first and second classes are transmitted on separated wavelength channels, the node (N1...N9) comprising:

- a first queue (Q1) for the optical packets of first class from the client traffic (4),
- a second queue (Q2) for the optical packets of second class from the client traffic (4),
- a third queue (Q3) for the optical packets of first class in inter-ring transit,
- a fourth queue (Q4) for the optical packets of second class in inter-ring transit,

the scheduler (3) being configured for transmitting in priority, for the first class traffic:

- a packet of the third queue (Q3) if the third queue (Q3) is not empty else,
- a packet of the first queue (Q1) if the first queue (Q1) is not empty and if it is allowed by the token bucket algorithm (5) and
for the second class traffic,
- a packet of the fourth queue (Q4) if the fourth queue (Q4) is not empty else,
- a packet of the second queue (Q2) if the second queue (Q2) is not empty and if it is allowed by the fairness criterion (7).

16. Optical node (N1...N9) in accordance with claim 10 to 12 wherein the multi-ring network (200) enables a transparent transmission of the packets between two different rings (R1, R2...R9) and wherein the optical packets of first and second classes are transmitted on separated wavelength channels, the node comprising:

- a first queue (Q1) for the optical packets of first class from the client traffic (4),

- a second queue (Q2) for the optical packets of second class from the client traffic (4),

the scheduler (3) being configured for transmitting in priority, for the first class traffic:

- a packet of the first queue (Q1) if the first queue is not empty and if it is allowed by the token bucket algorithm (5) and,
for the second class traffic,
- a packet of the second queue (Q2) if the second queue (Q2) is not empty and if it is allowed by the fairness criterion (7).

17. Optical multi-ring network (200) comprising a plurality of nodes (N1...N9) in accordance with one of the claims 10 to 16.

**Fig.1**

**Fig.2**

Fig.3

N3'

R3

Q3

Q4

R6

5

3

R6

7

Q1

Q2

9

11

Q1'

Q2'

4

**Fig.4**

**Fig.5**

N3'''

R6

5

3

7

Q1  Q2

9  11

Q1'  Q2'

4

Fig.6

```
┌─────────────────┐
│                 │
│      101        │
│                 │
└─────────────────┘
         │
         ▼
┌─────────────────┐
│                 │
│      102        │
│                 │
└─────────────────┘
         │
         ▼
┌─────────────────┐
│                 │
│      103        │
│                 │
└─────────────────┘
         │
         ▼
┌─────────────────┐
│                 │
│      104        │
│                 │
└─────────────────┘
         │
         ▼
┌─────────────────┐
│                 │
│      105        │
│                 │
└─────────────────┘
         │
         ▼
┌─────────────────┐
│                 │
│      106        │
│                 │
└─────────────────┘
```

**Fig.7**

Europäisches
Patentamt

European
Patent Office

Office européen
des brevets

# EUROPEAN SEARCH REPORT

Application Number

EP 17 30 6392

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 386 233 B2 (CIT ALCATEL [FR]) 10 June 2008 (2008-06-10) * column 7, line 19 - column 8, line 44; figure 6 * | 1-17 | INV. H04Q11/00 |
| A | WO 00/69126 A1 (BRITISH TELECOMM [GB]; COTTER DAVID [GB]; LUCEK JULIAN KAZIMIERZ [GB]) 16 November 2000 (2000-11-16) * page 4, line 19 - page 5, line 29; figures 2,3 * | 1-17 | |
| A | EP 2 942 973 A1 (TRANSPACKET AS [NO]) 11 November 2015 (2015-11-11) * paragraphs [0034], [0284], [0290]; figure 5 * | 1-17 | |
| A | US 2012/170932 A1 (CHU THOMAS P [US] ET AL) 5 July 2012 (2012-07-05) * paragraphs [0037], [0046], [0047]; figure 5 * | 1-17 | |

TECHNICAL FIELDS
SEARCHED (IPC)

H04Q

The present search report has been drawn up for all claims

| Place of search | Date of completion of the search | Examiner |
|---|---|---|
| Munich | 12 April 2018 | Borsier, Celine |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 30 6392

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2018

| Patent document cited in search report | | Publication date | Patent family member(s) | | Publication date |
|---|---|---|---|---|---|
| US 7386233 | B2 | 10-06-2008 | AT | 303685 T | 15-09-2005 |
| | | | CN | 1559113 A | 29-12-2004 |
| | | | DE | 60205920 D1 | 06-10-2005 |
| | | | DE | 60205920 T2 | 08-06-2006 |
| | | | EP | 1428333 A2 | 16-06-2004 |
| | | | FR | 2829327 A1 | 07-03-2003 |
| | | | US | 2004240881 A1 | 02-12-2004 |
| | | | WO | 03021823 A2 | 13-03-2003 |
| WO 0069126 | A1 | 16-11-2000 | AT | 406017 T | 15-09-2008 |
| | | | AU | 762107 B2 | 19-06-2003 |
| | | | CA | 2371026 A1 | 16-11-2000 |
| | | | CN | 1352841 A | 05-06-2002 |
| | | | EP | 1177657 A1 | 06-02-2002 |
| | | | US | 6959151 B1 | 25-10-2005 |
| | | | WO | 0069126 A1 | 16-11-2000 |
| EP 2942973 | A1 | 11-11-2015 | EP | 2671389 A2 | 11-12-2013 |
| | | | EP | 2942973 A1 | 11-11-2015 |
| | | | US | 2014355977 A1 | 04-12-2014 |
| | | | US | 2017094379 A1 | 30-03-2017 |
| | | | WO | 2012104623 A2 | 09-08-2012 |
| US 2012170932 | A1 | 05-07-2012 | NONE | | |

EPO FORM P0459

For more details about this annex : see Official Journal of the European Patent Office, No. 12/82